# EUROPEAN PATENT APPLICATION

(11) **EP 3 376 501 A1**
(43) Date of publication of application: **19.09.2018**
(21) Application number: 17206035.2
(22) Date of filing: 07.12.2017
(51) Int. Cl.: G11B 27/10, G11B 27/32, G06F 17/30

(54) **A SYSTEM AND METHOD FOR PLAYING MUSIC**

(30) Priority: 14.03.2017 IN 201731008787; 02.11.2017 WO PCT/IN2017/050507
(71) Applicant: Saregama India Limited, 700028 West Bengal (IN)
(72) Inventor: MUDALIAR, Avinash, 400050 Maharashtra (IN); WADHWANI, Jai, 400074 Maharashtra (IN); BANERJEE, Siddhartha, 700095 West Bengal (IN); IMCHEN, Sunep, 400050 Maharashtra (IN)
(74) Representative: Barker Brettell LLP

(57) **Abstract**

The invention provides a system and method for playing music whereby music is played without repetition. The system comprising a database having plurality of music files, and a processor configured for randomly selecting a next music file from plurality of pre-stored music files stored on a database, comparing the next music file with a playback history, the playback history created by storing information of a predetermined number of previously played music files, determining whether the next music file is the same as any music file from the previously played music files, and playing the next music if the next music file is not present in the playback history or selecting a new music file to be played if the next music file is the same as any music file from the playback history.

## Description

### FIELD OF THE INVENTION

The invention relates to a system and method for playing music, more particularly to a system and method for playing music whereby music is played without repetition.

### BACKGROUND OF THE INVENTION

In earlier days, music players such as record players, cassette players, CD players, radios, etc. were the sources for listening to music/songs. However, these devices were bulky, and hence portability was always an issue. With advent in technology, issue of portability was resolved to an extent when portable radios, portable cassette/CD players came into existence. While such portable players gained immense popularity due to ease of carrying them, limited storage capacity of cassettes/CDs was a drawback.

Digitization of music and introduction of portable digital music devices has overcome the problems of limited storage, and also eliminated the need for separate media to store music. Almost an unlimited number of songs can now be stored on one single device depending upon storage capacity of the device. Even electronic devices such as mobile phones, laptop, computer, tablets etc can store such digital music. However, digital music has to be searched and downloaded from other sources, mostly internet. Though there are various sources available for downloading and distributing music, it is often challenging and complex for people who are not technically skilled to gain access to digital music. Also, downloading music can be a costly and time consuming process.

Further, most music players are capable of playing music files in a serial or random order. In the serial order, music files are retrieved and played serially, whereas in the random order, music files are played randomly. However, in the random order even though music files are retrieved and played randomly, music files tend to repeat i.e. one of the songs played previously may be played again, which is undesirable. A need therefore exists to at least overcome the abovementioned problems.

### SUMMARY OF THE INVENTION

In one aspect a method for playing music is provided. The method comprising the steps of randomly selecting a next music file by a processor from plurality of pre-stored music files stored on a database, comparing the next music file with a playback history by the processor , the playback history created by storing information of a predetermined number of previously played music files, determining by the processor whether the next music file is the same as any music file from the previously played music files, and playing the next music if the next music file is not present in the playback history or selecting a new music file to be played by the processor if the next music file is the same as any music file from the playback history.

In another aspect a system for playing music is provided. The system comprising a database having plurality of music files, and a processor configured for randomly selecting a next music file from plurality of pre-stored music files stored on a database, comparing the next music file with a playback history, the playback history created by storing information of a predetermined number of previously played music files, determining whether the next music file is the same as any music file from the previously played music files, and playing the next music if the next music file is not present in the playback history or selecting a new music file to be played if the next music file is the same as any music file from the playback history.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 shows a system for playing music in accordance with an embodiment of the invention.
Figure 2 shows a system for playing music in accordance with an embodiment of the invention.
Figure 3 shows a flowchart of a method for playing music in accordance with an embodiment of the invention.
Figure 4 shows a portable device in accordance with an embodiment of the invention.

### DETAILED DESCRIPTION OF THE INVENTION

The present invention is directed towards a method and system for playing music which can be incorporated in a portable device, wherein plurality of pre-stored music files are associated with at least one mode and/or listing. The music files are retrieved and played depending upon the selection of a particular mode and/or listing such that music files are played without repetition.

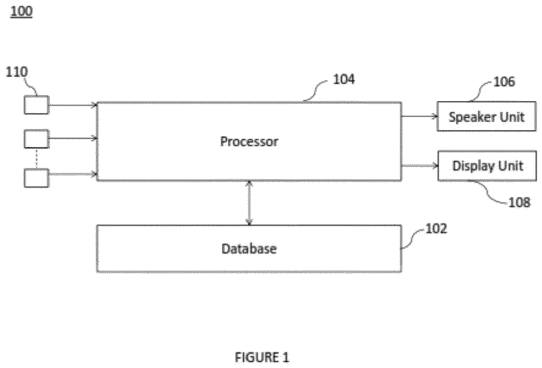

Figure 1 shows a system 100 for playing music in accordance with an embodiment of the invention. The system comprises a database 102, a processor 104, a speaker unit 106, a display unit 108, and plurality of selection switches 110.

The database comprises plurality of music files. In an embodiment, the music files are associated with at least one mode from plurality of modes. For example, an artist based mode, a mood based mode, a fixed playlist mode, etc. Further, each of such modes includes one or more listings/channels, wherein the music files are associated with one or more listings. For example, artist based mode includes plurality of artist based listing - a first artist listing, a second artist listing, etc; the mood based mode includes mood based listing - a first mood listing, a second mood listing, etc; and the fixed playlist mode includes - a first fixed playlist, a second fixed playlist, etc. Each of the music file thus is associated with one or more modes and/or listings. Accordingly, upon selection of a particular mode and/or listing, music files associated with the particular mode and/or listing will be retrieved. In an embodiment, each music file is identified/named with a unique code. The unique code of the music file includes at-least one identifier for associating the music file with a particular mode and/or listing. The unique code can be a value in the form of decimal or hexadecimal or binary, or in the form of alphabets. Accordingly, upon selection of a particular mode and/or listing, music files having the identifier associated with the selected mode and/or listing will be retrieved.

As shown in the figure, plurality of switches are provided for selecting different modes and/or listings. In an embodiment dedicated switches may be provided for actuating each mode and/or listing. Further, selection switches may be provided for changing/navigating music files i.e. selecting previous or next music files. Selection switches can be selected from any of a rotary switch, a push-button switch, a toggle switch, etc.

Once a particular mode and/or listing is selected the processor identifies and retrieves only the music files from the plurality of music files which are associated with the particular mode and / or listing by using the identifier.

The processor is configured to select the music files in a serial order or a random order. The music files are selected in a serial order in the fixed playlist mode, whereas music files are selected in a random order in the artist based more or the mood based mode. In an embodiment, the processor is configured to select music files in the random order depending upon a playback history to avoid repetition of already selected/played music files. In this regard, the processor is configured to create the playback history by storing information of a predetermined number of previously selected/played music files in the database, wherein information of music files previously played on the system is stored on the database. In this regard, the playback history is constantly updated. In an example, information of approximately 20 previously played music files is stored. In an embodiment, the unique code of each music file of the playback history is stored in the database, and the unique code of the next music file is compared with the unique code of previously played music files. Comparing the music files based on unique codes reduces the processing or retrieval time of music files, thereby improving user experience. Based on the comparison of the next music file with the playback history, the processor plays the next music file or selects a new music file. In case the next music file is the same as any of the previously played music files, the next music file is skipped, and a new music file is selected and played on the speaker unit. In case the next music file is not the same as the playback history, the next music file is played on the speaker unit. Advantageously, there will be no repetition in playing music files, and music files will be retrieved and played without any delay.

Further, the processor is configured to create a separate playback history by keeping a track of information of previously played music files. In an example, information of approximately 5 previously played music files is stored. The separate playback history is created to allow the previously played music files to be played again. In this regard, the previously played music files have to be selected manually. Navigation switches can be provided for skipping the current song which is being played and selecting any other song manually. Additionally, the processor can also be configured with a long press functionality wherein if navigation switches are pressed for a longer period of time then a predetermined number of songs are skipped before selecting a new song. For instance, if the navigation switch is pressed for more than three seconds, next 10 songs associated with the selected mode and/or listing are skipped.

Further, as shown the display unit is connected to the processor. The display unit is configured to at-least display information in relation to mode name, listing name, artist name, music file name, etc. The display unit thus provides all the information in relation to the music being played.

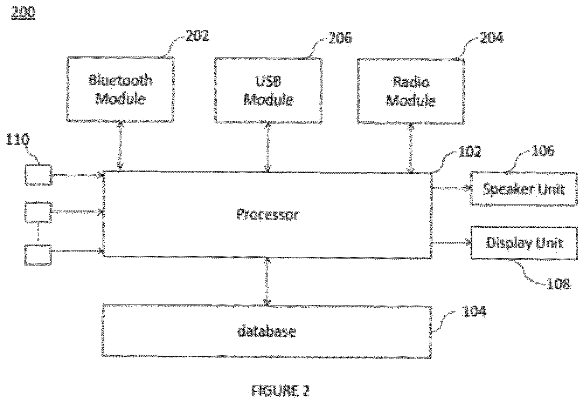

Figure 2 shows a system 200 for playing music in accordance with an embodiment of the invention. The system shown in figure 2 is similar to system shown in figure 1 and further comprises a Bluetooth module 202, a radio module 204, and a USB module 206. The system, thus in addition to the modes described hereinbefore can also be operated in a Bluetooth mode or a radio mode or a USB mode. The aforementioned modes can be configured to be actuated by dedicated switches, and the display unit is configured to display information as per the mode selected.

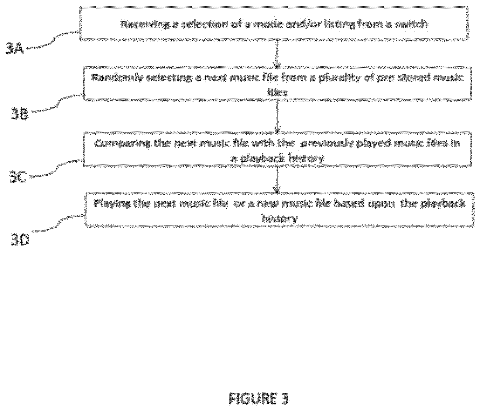

Figure 3 shows a flowchart of a method for playing music. In an embodiment, plurality of music files are provided/stored on a database, wherein music files are associated with one or more modes and/or listings. Further, each music file is identified/named with a unique code. The unique code of the music file includes at-least one identifier for associating the music file with a particular mode and/or listing. The unique code can be a value in the form of decimal or hexadecimal or binary, or in the form of alphabets. The method begins at step 3A, where selection of one of the modes and/or listings is provided/received via a switch. The switch can be any of rotary switch, a push-button switch, a toggle switch, etc. Once a particular mode and/ or listing is selected, the method identifies the music files associated with the particular mode and/or listing by using the unique code and only retrieves the music file associated with the selected mode and/or listing and proceeds to step 3B. At step 3B, a next music file from the plurality of music files associated with the mode and/or listing is selected. Once the next music file is selected, the method proceeds to step 3C where the next music file is compared with a playback history to avoid repetition of previously played music files. In this regard, the playback history is created by keeping a track of previously played music files, wherein information of a predetermined number of previously played music files is stored. In this regard, the playback history is constantly updated. The selected file is compared with the playback history - information of previously selected music files. In an example, information of approximately 20 previously played music files is stored. In an embodiment, the unique code of each music file played is stored in the database, and the unique code of the next music file is compared with the unique code of previously played music files. Comparing the music files based on unique codes reduces the processing or retrieval time of music files, thereby improving user experience. Based on the comparison of the next music file with the playback history, the method proceeds to step 3D, where the next music file is played or a new music file is selected. In case the next music file is the same as any of the previously played music files, a new music file is selected and played on the speaker unit. In case the next music file is not the same as any music file in the playback history, the next music file is played on the speaker unit. Advantageously, there will be no repetition in playing music files, and music files will be retrieved and played without any delay.

Furthermore, the method comprises the step of creating a separate playback history by keeping a track of information of previously played music files. In an example, information of approximately 5 previously selected/played music files is stored. The separate playback history is created to allow the previously played music files to be selected again.

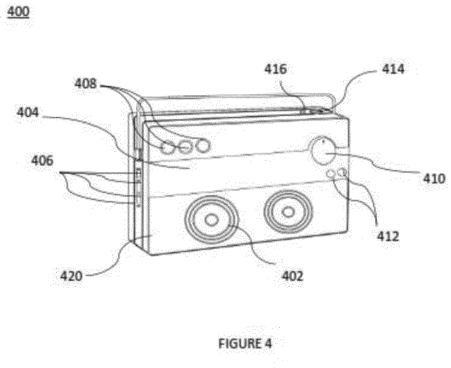

Figure 4 shows a portable device in accordance with an embodiment of the invention. The portable device incorporates the system and method described hereinbefore. Accordingly, the portable device includes a database (not shown), a processor (not shown), a speaker unit 402, a display unit 404, plurality of selection switches - primary mode selection switches 406, secondary mode selection switches 408, a rotary switch 410, a pair of navigation switches 412, an ON/OFF switch 414, a battery indicator 416, a Bluetooth module (not shown), a radio module (not shown), and a USB module (not shown), all of which are providing on a housing 420.

The housing includes opposing sides, a front and rear side and a top and bottom side. The primary selection switches are provided on the side of the housing for selecting a mode of the portable device. As shown, four primary selection switches - are provided for selecting a FM mode, a Bluetooth mode, a USB mode, and a digital music mode. The front side includes the secondary selection switches, the display unit, the speaker unit and the navigation switches and the rotary switch. The secondary selection switches are provided on a front side of the housing. As shown, three selection switches are provided for selecting - an artist based mode, a mood based mode and a fixed playlist mode. The pair of navigation buttons and the rotary switch are also provided on the front side adjacent to the display unit. The top side has the ON/OFF button and the battery indicator for the portable device.

By way of an example, various modes in which the portable device may be operated are described herein below:

### Digital Music Mode

The portable device is set into digital music mode upon selecting the switch for digital music mode. Under the digital music mode, any of an artist based mode, a mood based mode or a fixed playlist mode may be selected. As shown, three secondary selection switches are provided for selecting the artist based mode, the mood based mode and the fixed playlist mode. Upon, selection of any of the artist based mode or mood based mode, the pre-stored music files associated with the selected mode are retrieved and played randomly as discussed hereinbefore. If the fixed playlist mode is selected, music files are played in a serial manner. The rotary switch allows navigation/browsing of listings provided within each mode, and the pair of navigation switches allow changing of music files - previous or next on the device.

### USB Mode

The portable device is set into USB mode upon connecting an external USB device and selecting the switch for USB mode. Once in the USB mode, music from external storage device is retrieved and played on the portable device. The pair of navigation switches enable changing of songs in a serial manner - previous or next. Further, the rotary switch enable changing of folders in a serial manner. Also, the display unit when in USB mode is configured to display information of at-least a folder name and a song name.

### Bluetooth Mode

The portable device is set into Bluetooth mode upon selecting the switch for Bluetooth mode. Once in the Bluetooth mode, the portable device can be connected/paired wirelessly with other electronic devices, and play music from such connected electronic devices. Also, the display unit is configured to indicate that the device is in a Bluetooth mode.

### Radio Mode

The portable device is set into radio mode upon selecting the switch for radio mode. Once in the radio mode, the portable device supports reception of various radio channels, preferably radio channels in the range of FM frequency band - 87.5 Mhz to 108 Mhz. The pair of navigation switches enables changing of radio channel in a serial manner - previous or next. Further, the rotary switch enable fine tuning of frequency. Also, the display unit is configured to indicate that the device is in a radio mode, and the radio channel being played on the portable device.

While the present invention has been described with respect to certain embodiments, it will be apparent to those skilled in the art that various changes and modification may be made without departing from the scope of the invention as defined in the following claims.

## Claims

1. A system for playing music, the system comprising:
a database having plurality of music files; and
a processor configured for:
randomly selecting a next music file from plurality of pre-stored music files stored on a database;
comparing the next music file with a playback history, the playback history created by storing information of a predetermined number of previously played music files;
determining whether the next music file is same as any music file from the previously played music files; and
playing the next music if the next music file is not present in the playback history or selecting a new music file to be played if the next music file is the same as any music file from the playback history.

2. The system as claimed in claim 1, wherein the processor identifies the music files associated with the selected mode and/or listing; and retrieves the music files associated with the selected mode and/or listing.

3. The system as claimed in claim 1 or 2, wherein each music file is identified/named with a unique code having at-least one identifier for identifying the music file and associating the music file with a particular mode and/or listing.

4. The system as claimed in claim 1 or 3, wherein the processor compares the next music file with the playback history based upon unique codes.

5. The system as claimed in claim 3, wherein the unique code can be a value in the form of decimal or hexadecimal or binary or alphabets.

6. The system as claimed in claim 1 further comprises plurality of selection switches and a display unit.

7. A method for playing music, the method comprising the steps of:
randomly selecting a next music file by a processor from plurality of pre-stored music files stored on a database;
comparing the next music file with a playback history by the processor, the playback history created by storing information of a predetermined number of previously played music files;
determining by the processor whether the next music file is same as any music file from the previously played music files; and
playing the next music on a speaker unit if the next music file is not present in the playback history or selecting a new music file to be played on the speaker unit by the processor if the next music file is same as any music file from the playback history.

8. The method as claimed in claim 7, wherein each music file is associated with one or more modes and/or listings.

9. The method as claimed in claim 7 or 8, wherein the method includes the step of receiving a selection of mode and/or listing from a switch; identifying the music files associated with the selected mode and/or listing; and retrieving music files from the selected mode and/or listing.

10. The method as claimed in claim 7 or 8, wherein each music file is identified/named with a unique code having at-least one identifier for identifying the music file and associating the music file with a particular mode and/or listing.

11. The method as claimed in claim 7 or 10, wherein the comparison of the next music file with the playback history is based upon unique codes.

12. The method as claimed in claim 10, wherein the unique code can be a value in the form of decimal or hexadecimal or binary or alphabets.
